Europäisches Patentamt

European Patent Office

Office européen des brevets

(11) Veröffentlichungsnummer: **0 326 881**
**A1**

(12) **EUROPÄISCHE PATENTANMELDUNG**

(21) Anmeldenummer: 89101027.4

(22) Anmeldetag: 21.01.89

(51) Int. Cl.⁴: **F25B 15/10 , F25B 25/00**

(30) Priorität: 03.02.88 CH 376/88

(43) Veröffentlichungstag der Anmeldung:
09.08.89 Patentblatt 89/32

(84) Benannte Vertragsstaaten:
CH DE GB IT LI LU SE

(71) Anmelder: SIBIR AG
Münchwiesen 5
CH-8952 Schlieren(CH)

(72) Erfinder: Schüpbach, Reto
Underem Berg 488
CH-8475 Ossingen(CH)
Erfinder: Wassermann, Carl Ulrich
Bodenacherstrasse 308
CH-5444 Künten(CH)

(74) Vertreter: Troesch, Hans Alfred, Dr. Ing. Dr.
Troesch AG Patentanwälte VSP et al
Walchestrasse 19
CH-8035 Zürich(CH)

(54) **Absorptionskälteaggregat.**

㊼ Beim Absorptionskälteaggreat mit drucksausgleichendem inertem Hilfsgas weist der Verdampfer des Absorptionskälteaggregates mindestens zwei Teilverdampfer (12,18) auf. An jedem der Teilverdampfer (12,18) ist mindestens ein Sekundärsystem (15,23) zur Gewährleistung der Wärmeübertragung zwischen dem Teilverdampfer (16,20) und den zu kühlenden Gegenständen oder Kühlfächern (16, 20) mittels Phasenübergang eines Sekundärkältemittels angeordnet. Dabei arbeiten die Sekundärsysteme (15,23) der Teilverdampfer (12,18) während des stationären Betriebes vorzugsweise bei unterschiedlichen Temperaturen. Die Temperatur jedes Sekundärsystems (15) jedes Teilverdampfers (12) ist tiefer als die des oder der Sekundärsysteme(s) (23) des in Flussrichtung des Kältemittels des Absorptionskälteaggregates folgenden Teilverdampfers (18). Zwischen je zwei benachbarten Teilverdampfern (12,18) ist ein Gaswärmeaustauscher (17) angeordnet.

Fig. 2

## Absorptionskaelteaggregat

Die vorliegende Erfindung betrifft ein Absorptionskaelteaggregat mit Hilfsgas.

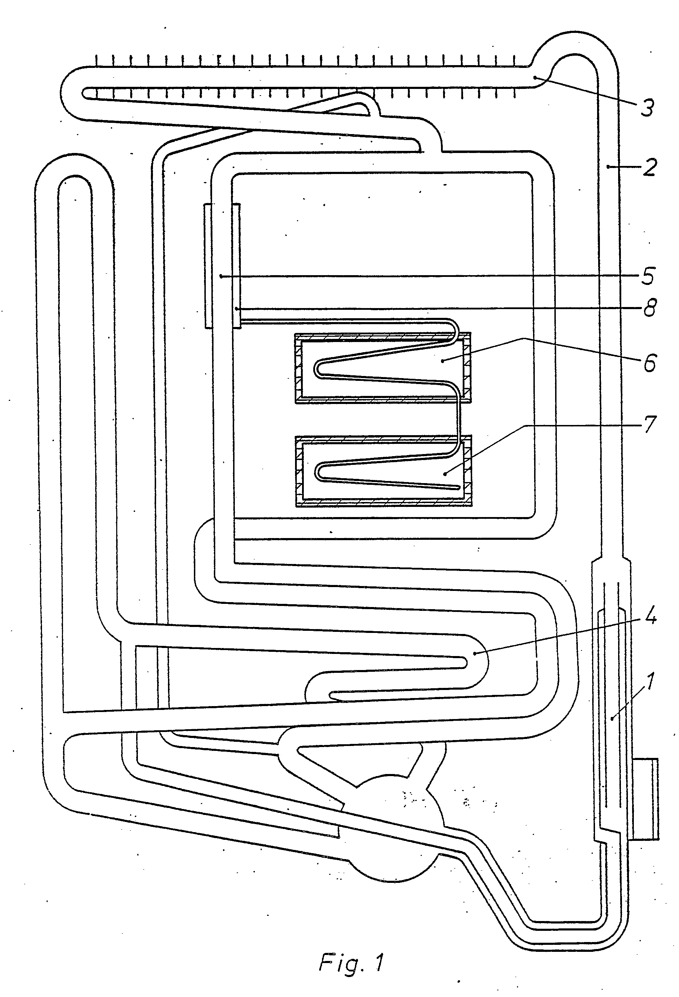

Absorptionskaelteaggregate mit Hilfsgas werden fuer den Einsatz in Kuehlschraenken verwendet, insbesondere fuer nicht elektrischen Betrieb. Eine bekannte Ausfuehrung ist in Figur 1 dargestellt.Hier wird in einem Austreiber 1 aus einer Loesung das Kaeltemittel mittels Waermezufuhr ausgetrieben. Es gelangt durch den Wasserabscheider 2 in den Kondensator 3. Das dampffoermige Kaeltemittel wird im Kondensator 3 kondensiert und in den Verdampfer 5 geleitet, wo es unter Aufnahme von Waerme verdampft. Im Absorber 4 wird es unter Waermeabgabe wieder von der an Kaeltemittel armen Loesung absorbiert. Es ist aus der Patentliteratur (OS 2449372, BRD) bekannt, den Verdampfer nicht direkt bei den zu kuehlenden Gegenstaenden anzuordnen, sondern den Waermefluss von den zu kuehlenden Gegenstaenden zum Verdampfer durch ein geschlossenes Sekundaersystem zu gewaehrleisten. Der Einsatz eines Absorptionskaelteaggregates mit Sekundaersystem zwischen Verdampfer und Kuehlfaechern in einem Mehrtemperaturkuehlschrank bekannter Bauart hat einen niedrigen Wirkungsgrad des Absorptionskaelteaggregates zur Folge, aus dem ein hoher Energieverbrauch des Absorptionskaelteaggregates resultiert.

Aufgabe der Erfindung ist es, den Wirkungsgrad eines Absorptionskaelteaggregates mit Sekundaersystem in einem Mehrtemperaturkuehlschrank zu erhoehen und damit den Energieverbrauch und die Betriebskosten zu senken.

Erfindungsgemaess wird die Aufgabe durch ein Absorptionskaelteaggregat gemaess einem der Ansprueche geloest.

Die Erfindung wird anschliessend beispielsweise anhand einer Zeichnung erlaeutert. Es zeigen :

Fig. 1: das Schema eines bekannten Aggregates,

Fig. 2: eine moegliche Ausfuehrung eines erfindungsgemaessen Absorptionskaelteaggregates

Fig. 3: ein Einrohr-Sekundaersystem

Fig. 4: ein Zweirohr-Sekundaersystem

Der in einem Austreiber 9 erzeugte Kaeltemitteldampf wird in einem Kondensator 10 kondensiert. Das fluessige Kaeltemittel wird in einem Vorkuehler 11 auf die Temperatur eines ersten Teilverdampfers 12 vorgekuehlt. Im ersten Teilverdampfer 12 verdampft ein Teil des fluessigen Kaeltemittels in das an Kaeltemittel arme Hilfsgas unter Aufnahme von Waerme. Dadurch wird auf der Aussenseite des Teilverdampfers 12 im Bereich eines diesen umgebenden Mantelrohrs 13 ein weiteres Kaeltemittel, das Sekundaerkaeltemittel kondensiert. Dieses fliesst durch eine Leitung 14 in einen Sekundaerverdampfer 15, in dem das fluessige Sekundaerkaeltemittel unter Aufnahme von Waerme aus einem zu kuehlenden Raum 16 verdampft. Durch die Leitung 14 gelangt das Sekundaerkaeltemittel wieder in das Mantelrohr 13 des Teilverdampfers 12. Dabei stellt sich im Sekundaersystem des Teilverdampfers 12 ein Temperatur T1 ein, welche wenig unterhalb der Temperatur des Raums 16 liegt.

Das teils fluessige, teils bereits verdampfte Kaeltemittel des Absorptionskaelteaggregates gelangt durch einen Gaswaermetauscher 17, in dem es sich erwaermt, in einen zweiten Teilverdampfer 18 wo der noch fluessige Anteil des Kaeltemittels des Absorptionskaelteaggregates unter Aufnahme von Waerme ganz oder teilweise verdampft. Die dazu notwendige Waerme wird von einem Kondensator 19 eines zweiten Sekundaersystems dem zweiten Teilverdampfer 18 zugefuehrt. Das zweite Sekundaersystem arbeitet analog zu dem vorbeschriebenen Sekundaersystem des ersten Teilverdampfers 12 in dem es einem kuehlenden Kuehlfach 20 Waerme entzieht. Dabei stellt sich in dem Sekundaersystem eine Temperatur T2 ein, die wenig unterhalb der Temperatur des Kuehlfachs 20 liegt.

Das mit dem Kaeltemittel des Absorptionskaelteaggregates angereicherte Hilfsgas gelangt in einen Waermetauscher 21, in dem es sich erwaermt.

Die Vorteile des erfindungsgemaessen Absorptionskaelteaggregates sind in der Folge dargestellt:

Der in Flussrichtung des Kaeltemittels des Absorptionskaelteaggregates letzte Teilverdampfer 18 wird aufgrund der Waermezufuhr durch das zugehoerige Sekundaersystem auf einer Temperatur wenig unterhalb der Temperatur des Kuehlfachs 20 gehalten. Dieser Teilverdampfer 18 hat erfindungsgemaess im Absorptionskaelteaggregat die hoechste Temperatur aller Teilverdampfer. In einem typischen handelsueblichen Mehrtemperaturkuehlschrank betraegt diese Temperatur circa 0 Grad Celsius, entsprechend einer Kuehlfachtemperatur von 5 Grad Celsius. Diese Temperatur stellt gleichzeitig die Verdampfungsendtemperatur des Absorptionskaelteaggregates dar, das heisst die hoechste zur Erzeugung der Kaelteleistung des Absorptionskaelteaggregates verwendete Temperatur.

Demgegenueber stellt sich bei der beispielsweise in Figur 1 dargestellten Anwendung eines Sekundaersystems zur Waermeuebertragung von den Kuehlfaechern auf den Verdampfer 5 des Absorptionskaelteaggregates in dem Verdampfer 5 eine Temperatur etwas tiefer als die Temperatur des kaeltesten Kuehlfaches 6 ein. Diese Temperatur ist gleichzeitig die Verdampfungsendtemperatur des Absorptionskaelteaggregates; sie betraegt bei einem handelsueblichen Mehrtemperaturkuehlschrank circa -22 Grad Celsius, entsprechend einer Kuehlfachtemperatur von -18 Grad Celsius. Bei Verwendung eines Sekundaersystems, welches nicht auf der Phasenumwandlung eines Kaeltemittels basiert, sondern bei welchem der Waermetransport durch Erwaermung und Abkuehlung eines Kaeltemittels stattfindet, ist eine hoehere Verdampfungsendtemperatur des Absorptionskaelteaggregates moeglich. Es werden jedoch dann die fuer die Waermeuebertragung im Sekundaersystem notwendigen Leitungsquerschnitte sehr gross, wegen der im Vergleich zur Verdampfungsenthalpie geringen spezifischen Waermekapazitaet der moeglichen Kaeltemittel, sodass die praktische Anwendung eines solchen Sekundaersytems unzweckmaessig ist.

Die bei der erfindungsgemaessen Verwendung mehrerer Sekundaersysteme hoehere Verdampfungsendtemperatur des Absorptionskaelteaggregates gegenueber der Verwendung nur eines Sekundaersystems erhoeht den am Verdampfungsende vorhandenen Partialdruck des Kaeltemittels im KaeltemittelHilfsgasGemisch. Damit reduziert sich die bei gegebener Kaeltemittelmenge notwendige Hilfsgasmenge pro Zeiteinheit. Daraus resultieren mehrere Vorteile:

Die kleinere pro Zeiteinheit umlaufende Hilfsgasmenge reduziert die im Gaswaermeaustauscher 21 unvermeidlichen Verluste, die bei einem gegebenen Gaswaermeaustauscher der pro Zeiteinheit umlaufenden Gasmenge proportional sind.

Das staerker angereicherte Hilfsgas erhoeht die Kaeltemittelkonzentration der aus einem Absorber 22 austretenden Loesung. Daraus ergeben sich entsprechend dem Siedepunkt der an Kaeltemittel reichen Loesung niedrigere Austreibertemperaturen und damit kleinere Isolationsverluste am Austreiber sowie wegen der bei tieferer Temperatur geringeren Korrosion eine laengere Austreiberlebensdauer. Die hoehere Konzentration der an Kaeltemittel reichen Loesung erhoeht ebenfalls den Austreiberwirkungsgrad, der als Verhaeltnis der Enthalpie des vom Austreiber produzierten Kaeltemitteldampfstromes zur dem Austreiber zugefuehrten Heizleistung definiert wird. Der Austreiberwirkungsgrad steigt mit zunehmender Konzentration der reichen Loesung, sodass sich fuer eine gegebene Kaelteleistung des Absorptionskaelteaggregates und damit eine gegebene vom Austreiber zu erzeugende Menge Kaeltemitteldampf pro Zeiteinheit eine geringere Heizleistung notwendig wird, aus der niedrigere Unterhaltskosten des Absorptionskaelteaggregates resultieren.

Wird ein Absorptionskaelteaggregat durch Ein- und Ausschalten der Austreiberheizung geregelt, so ist das Absorptionskaelteaggregat normalerweise 50 Prozent der Zeit in Betrieb. Waehrend der Nichtbetriebszeit des Absorptionskaelteaggregates erwaermen sich die Kuehlfaecher 6,7,16,20 infolge der Isolationsverluste des Kuehlschrankes bis zum Wiedereinschalten des Absorptionskaelteaggregates, ueblicherweise durch den an geeigneter Stelle in den Kuehlfaechern angebrachten Thermostat. Waehrend dieser Zeit findet bei der Verwendung nur eines Sekundaersystems fuer die Kuehlfaecher ein Waermetransport statt. Bei den Mehrtemperaturkuehlschraenken bekannter Bauart ist normalerweise das kaeltere Tiefkuehlfach 6 oberhalb des waermeren Hauptkuehlfaches 7 angeordnet, so dass im Sekundaersystem ein Waermetransport in dem die beiden Kuehlfaecher verbindenden Rohr stattfindet. Dabei stroemt dampffoermiges Sekundaerkaeltemittel im Rohr nach oben in das Tiefkuehlfach 6. Dort kondensiert es unter Waermeabgabe und fliesst in fluessiger Phase in das tiefer liegende Hauptkuehlfach 7 zurueck, wo es unter Aufnahme von Waerme verdampft. Damit findet ein Waermetransport vom Hauptkuehlfach 7 zum kaelteren Tiefkuehlfach 6 statt. Wegen der in der Regel geringeren Waermekapazitaet des gegenueber dem Hauptkuehlfaches 7 kleineren Tiefkuehlfaches 6 ergibt sich eine schnellere Erwaermung des Tiefkuehlfaches relativ zum Hauptkuehlfach 7, sodass sich, insbesondere bei niedrigen Aussentemperaturen zum Beispiel 10 Grad Celsius und damit bei langen Nichtbetriebszeiten des Absorptionskaelteaggregates periodisch unzulaessig hohe Tiefkuehlfachtemperaturen ergeben koennen.

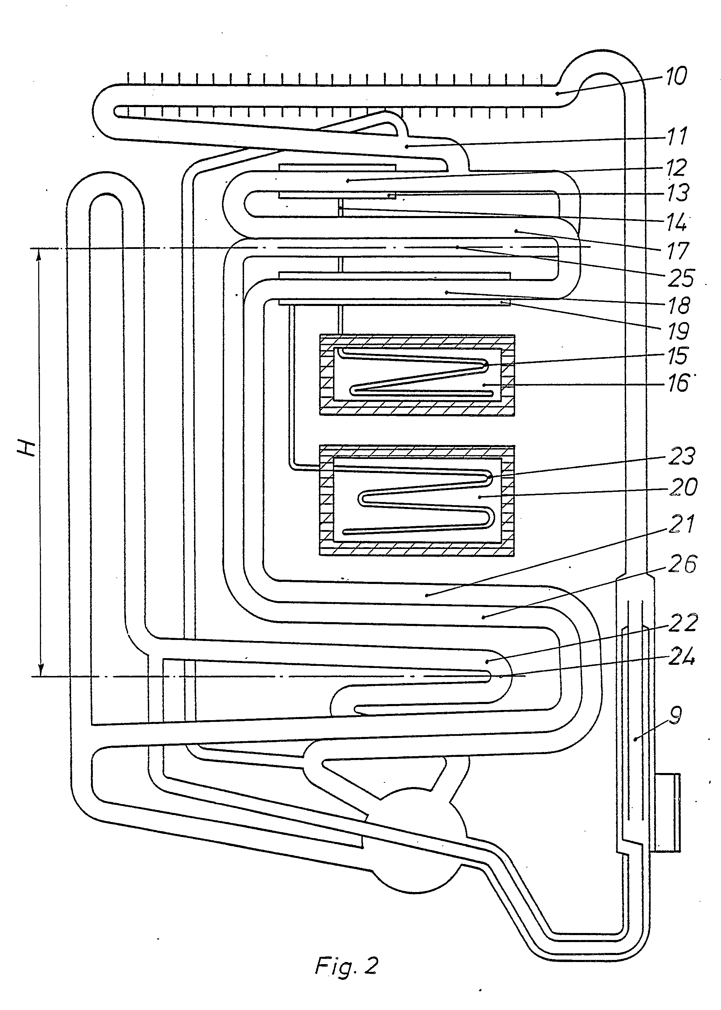

Durch die erfindungsgemaesse Verwendung mindestens je eines Sekundaersystems pro Kuehlfach sind diese voneinander thermisch getrennt. Der Waermetransport durch die Isolation vom Hauptkuehlfach 20 (Fig. 2) zu dem als Tiefkuehlfach 16 ausgebildeten Raum ist bezueglich den Isolationsverlusten der Kuehlraume 16,20 gegenueber der Umgebung relativ klein, ueblicherweise etwa 10 Prozent. Damit wird eine zu schnelle Erwaermung des Tiefkuehlfaches 16 relativ zum Hauptkuehlfach 20 waehrend der Nichtbetriebszeit des Absorptionskaelteaggregates vermieden.

Bei der erfindungsgemaessen Anordnung von Sekundaersystemen zwischen den Kuehlfaechern 16,20 und den Teilverdampfern 12,18 des Absorptionskaelteaggregates findet waehrend der Nichtbetriebszeit des Absorptionskaelteaggregates kein Waermetransport durch die Sekundaersysteme von den Kuehlfaechern zu den Teilverdampfern des Absorptionskaelteaggregates statt. Zur Gewaehrleistung der Funktion der vorbeschriebenden Sekundaersysteme muss die kalte Seite des Sekundaersystems, in diesem Fall der jeweilige Teilverdampfer 12,18 des Absorptionskaelteaggregates oberhalb des warmen Seite des Sekundaersystems, in diesem Fall der Sekundaerverdampfer 15,23 im Kuehlfach angeordnet sein. Erwaermt sich der jeweilige Teilverdampfer 12,18 des Absorptionskaelteaggregates waehrend der Nichtbetriebszeit des Absorptionskaelteaggregates auf eine Temperatur hoeher als die des jeweiligen Kuehlfaches 16,20, so hoert der Waermetransport in dem Sekundaersystem selbstaetig auf, weil die obige Bedingung fuer die Funktion des Absorptionskaelteaggregates nicht mehr erfuellt ist. Die Erwaermung der Kuehlfaecher 16,20 eines solchen Kuehlschrankes waehrend der Nichtbetriebszeit des Absorptionskaelteaggregates erfolgt damit ausschliesslich ueber die Isolationsverluste des Gehaeuses, offene Kuehlfachtueren oder eingebrachte warme Gegenstaende. Die Waermezufuhr durch Sekundaersysteme oder das Absorptionskaelteaggregat ist vernachlaessigbar.

Bei der erfindungsgemaessen Anordnung von Sekundaersystemen zwischen den Teilverdampfern 12,18 des Absorptionskaelteaggregates und den Kuehlfaechern 16,20 stellt sich wie vorbeschrieben in den Sekundaersystemen eine Temperatur etwas unterhalb der jeweiligen Kuehlfachtemperatur ein. Die Temperaturdifferenz betraegt typisch 4 Grad. Die Temperaturverteilung innerhalb des Sekundaersystems ist wegen der hohen Verdampfungsenthalpie der ueblicherweise als Kaeltemittel verwendeten halogenierten Kohlenwasserstoffe sehr gering; sie bewegen sich innerhalb einiger zehntel Grad. Damit wird die Vereisungsneigung des jeweiligen Sekundaerverdampfers 15,23 reduziert. Die Vereisung eines Sekundaerverdampfers 15,23 ist nur bei einer mittleren Kuehlfachtemperatur von weniger als etwa 4 Grad moeglich. Ferner erfolgt die Eisbildung ueber den gesamten Verdampfer wegen der geringen Temperaturunterschiede gleichmaessig. Die Bildung eines Eisvolumens am kaeltesten Verdampferteil, wie es bei Kuehlschraenken mit Absorptionskaelteaggregat ohne oder nur mit einem Sekundaersytem ohne Phasenumwandlung des Kaeltemittels haeufig vorkommt, ist damit nicht moeglich. Die gleichmaessige Vereisung des Verdampfers des erfindungsgemaessen Sekundaersystems wird bei Erwaermung des Kuehlfachs 20 auf eine Temperatur hoeher als etwa 4 Grad Celsius wegen der geringen Eischichtdicke sehr schnell abgetaut. Damit ist die vollstaendige massive Vereisung des Verdampfers 23 insbesondere im Hauptkuehlfach 20, nur in extremen Ausnahmesituationen, die bei normalen Betrieb nicht vorkommen, moeglich.

Die erfindungsgemaesse Anordnung mehrerer Sekundaersysteme zwischen Kuehlfaechern 16,20 und Verdampfern 12,18 des Absorptionskaelteaggregates erlaubt die geometrische Trennung von Verdampfern 12,18 und Kuehlfaechern 16,20. Insbesondere ist es moeglich, die Verdampfer 12,18 so hoch wie moeglich anzuordnen. Die hoechst moegliche Anordnung der Verdampfer ist durch den Kondensator 10 und die Vorkuehlung 11 gegeben. Wie in Figur 2 dargestellt, koennen die Verdampfer 12,18 des Absorptionskaelteaggregates direkt unterhalb des Kondensators 10 angeordnet werden. Bei sonst gleichen aeusseren Abmessungen ergibt sich daraus ein maximaler Abstand H zwischen Mitte des Absorbers 24, der in etwa den geometrischen Schwerpunkt der Absorbtion darstellt, und dem geometrischen Schwerpunkt der Verdampfung 25. Der geometrische Schwerpunkt der Verdampfung 25 ist dabei ein fiktiver Punkt, der sich bezueglich des Antriebs des Gaskreislaufes gleich verhaelt wie die verteilte Verdampfung in den Teilverdampfern 12,18. Gleiches gilt fuer den Schwerpunkt des Absorbers 24. Durch den maximalen Abstand H wird eine maximale Antriebskraft fuer den Hilfsgaskreislauf erreicht. Die Antriebskraft des Hilfsgaskreislaufs resultiert in erster Linie aus den Dichteunterschieden zwischen an Kaeltemittel reichen Hilfsgas, welches aus den Verdampfern 12,18 in den Absorber 22 stroemt, und dem an Kaeltemittel armen Hilfsgas, welches durch die Leitung 26 vom Absorber 22 in die Verdampfer 12,18 stroemt, sowie aus der Hoehe der reichen und armen Gassaeulen, welche dem mittleren Abstand H zwischen Verdampfern und Absorber proportional sind. Die pro Zeiteinheit umlaufende Hilfsgasmenge haengt von dem Verhaeltnis von Druckabfall dP im Hilfsgaskreislauf zur Antriebskraft H ab und erreicht ein Optimum fuer ein bestimmtes Verhaeltnis.

Wird der Druckabfall dP bei Umgebungsdruck mit einem Volumenstrom von 100 Ltr Luft pro Stunde gemessen und die Hoehe H in Metern, so liegt das fuer eine anzustrebende ideale Hilfsgasmenge pro Zeiteinheit optimale Verhaeltnis H/dP bei etwa 0,25. Mit einer Vergroesserung des mittleren Abstandes H durch die moeglichst hohe Anordnung der Verdampfer 12,18 kann fuer ein konstantes Verhaeltnis H/dP der Druckabfall im Hilfsgaskreislauf proportional vergroessert werden. Die Vergroesserung des Druckabfalles erlaubt kleinere Spaltdicken im Hilfsgaskreislauf, was sowohl die Waermeuebergaenge verbessert als auch den mittlere Diffusionsweg in Verdampfern 12,18 und Absorber 22 reduziert. Damit werden die Verluste bei der Waermeuebertragung in Verdampfern 12,18, Gaswaermeaustauscher 17,21 und Absorber 22 verringert, sowie die Verdampfung und Absorption verbessert.

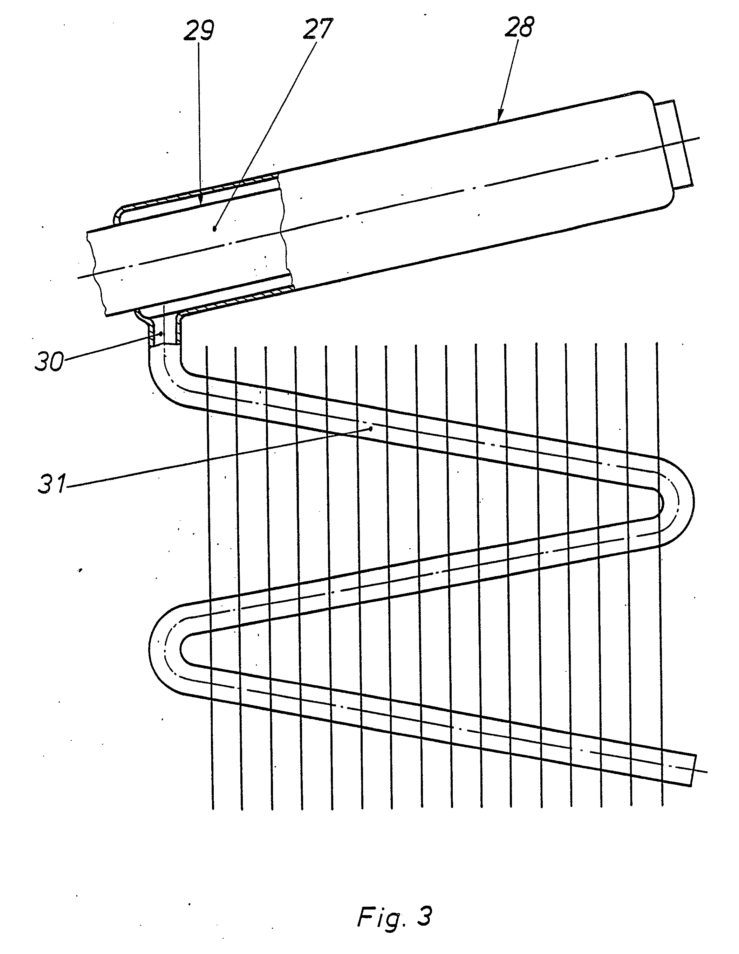

Bei der Auslegung der Sekundaersysteme, welche auf Phasenumwandlung eines Sekundaerkaeltemittels beruhen, sind mindestens zwei unterschiedliche Ausfuehrungsformen moeglich. Die technisch einfachere Loesung stellt das sogenannte Einrohrsystem dar. Es ist in Figur 3 beispielsweise dargestellt. Dabei ist um einen rohrfoermigen Verdampfer 27 ein Mantelrohr 28 gegenueber der Umgebung luftdicht angeordnet. Daraus ergibt sich ein hohlzylinderfoermiger Raum zwischen Mantelrohr 28 und Verdampfer 27, der mit einem gasfoermigen Kaeltemittel, z.B. halogenierter Kohlenwasserstoff gefuellt ist. Durch die Verdampfung im Inneren des Verdampfers 27 sinkt die Temperatur an der Verdampferrohroberflaeche 29 und loest dort die Kondensation des Kaeltemittels aus. Das fluessige Kaeltemittel laeuft am Verdampfer 27 des Absorptionskaelteaggregates ab und stroemt in das am tiefsten Punkt des Mantelrohres 28 angeschlossene Transportrohr 30. Das Transportrohr 30 geht bei setigem Gefaelle in ein im Innern des zu kuehlenden Kuehlfaches angeordnete Sekundaerverdampferrohr 31 ueber, in dem das fluessige Kaeltemittel unter Aufnahme von Waerme verdampft. Das gasfoermige Kaeltemittel stroemt im gleichen Transportrohr 30 in das Mantelrohr 28 zurueck. Die Stroemungsgeschwindigkeit des gasfoermigen Kaeltemittels darf einen Maximalwert von circa 1 -1,5 m/sec nicht ueberschreiten, um den Strom des fluessigen Kaeltemittels am Rohrgrund nicht zu behindern. Dies laesst sich durch ausreichend grosse Rohrquerschnitte oder durch grosse Dampfdruecke geeigneter Kaeltemittel erreichen. Bei Verwendung von Kaeltemitteln mit hohen Verdampfungsenthalpien kann die Temperaturdifferenz zwischen kaeltester und waermster Stelle im Sekundaersystem innerhalb weniger zehntel Grad gehalten werden.

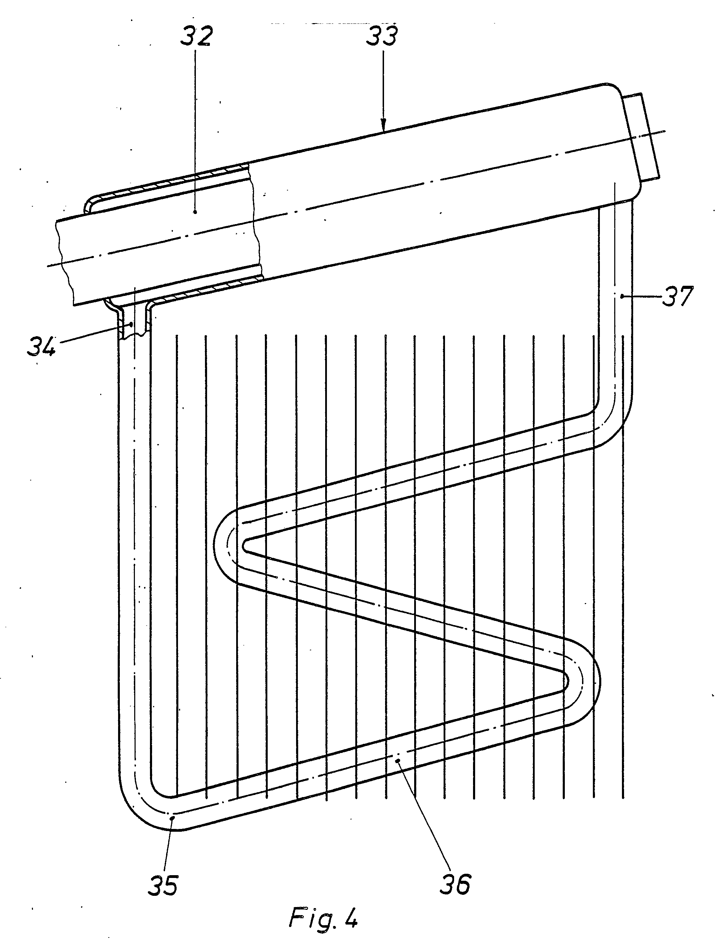

Eine andere Moeglichkeit zur Herstellung eines Sekundaersystem bietet das Zweirohrsystem. Es ist beispielsweise in Figur 4 dargestellt. Gegenueber dem Einrohrsystem unterscheidet es sich durch die getrennte Fuehrung von fluessiger zu gasfoermiger Phase des Kaeltemittels. Dabei wird am Verdampfer 32 des Absorptionskaelteaggregates im Inneren des Mantelrohrs 33 Kaeltemittel kondensiert, welches durch ein erstes Transportrohr 34 durch Gefaelle zum tiefsten Punkt 35 des im Kuehlfach angeordneten Sekundaerverdampfers 36 stroemt. Dort verdampft das Kaeltemittel unter Aufnahme von Waerme und stroemt durch ein zweites Transportrohr 37 zurueck in das Mantelrohr 33. Das Zweirohrsystem kommt mit kleineren Rohrquerschnitten aus als das Einrohrsystem, ist aber im Aufbau komplizierter.

## Ansprüche

1. Absorptionskaelteaggregat mit druckausgleichendem inertem Hilfsgas, vorzugsweise nach mindestens einem der Ansprueche, dadurch gekennzeichnet, dass der Verdampfer des Absorptionskaelteaggregates mindestens zwei Teilverdampfer (12,18) aufweist, wobei an jedem der Teilverdampfer (12,18) mindestens ein Sekundaersystem (15,23) zur Gewaehrleistung der Waermeuebertragung zwischen dem Teilverdampfer (16,20) und den zu kuehlenden Gegenstaenden oder Kuehlfaechern (16,20) mittels Phasenuebergang eines Sekundaerkaeltemittels angeordnet ist, wobei die Sekundaersysteme (15,23) der Teilverdampfer (12,18) waehrend des stationaeren Betriebes vorzugsweise bei unterschiedlichen Temperaturen arbeiten.

2. Absorptionskaelteaggregat, vorzugsweise nach mindestens einem der Ansprueche, dadurch gekennzeichnet, dass die Temperatur jedes Sekundaersystems (15) jedes Teilverdampfers (12) tiefer ist, als die des oder der Sekundaersysteme(s) (23) des in Flussrichtung des Kaeltemittels des Absorptionskaelteaggregates folgenden Teilverdampfers (18).

3. Absorptionskaelteaggregat, vorzugsweise nach mindestens einem der Ansprueche, dadurch gekennzeichnet, dass zwischen je zwei benachbarten Teilverdampfern (12,18) ein Gaswaermeaustauscher (17) angeordnet ist.

4. Absorptionskaelteaggregat, vorzugsweise nach mindestens einem der Ansprueche, dadurch gekennzeichnet, dass die Teilverdampfer des Absorptionskaelteaggregates moeglichst hoch, vorzugsweise direkt unterhalb des Kondensators angeordnet sind.

5. Kuehlschrank mit Absorptionskaelteaggregat, vorzugsweise nach mindestens einem der Ansprueche, dadurch gekennzeichnet, dass jedes Kuehlfach (16,20) eines Mehrtemperaturkuehlschrankes ueber je ein Sekundaersystem (15,23) mit je einem Teilverdampfer (12,18) des Absorptionskaelteaggregates zur Waermeuebertragung verbunden ist.

6. Verfahren zum Betreiben eines Absorptionskaelteaggregates vorzugsweise nach mindestens einem der Ansprueche, dadurch gekennzeichnet, dass man die Teilverdampfer mit unterschiedlichen Temperaturen betreibt.

Fig. 1

*Fig. 2*

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-C- 629 736 (PLATEN-MUNTERS REFRIGERATING SYSTEM)<br>* Seite 1, Zeile 50 - Seite 3, Zeile 64; Figur 1 * | 1-3,5,6 | F 25 B 15/10<br>F 25 B 25/00 |
| Y | US-A-2 598 737 (GRUBB)<br>* Spalte 7, Zeile 58 - Spalte 9, Zeile 53; Figuren 7,12,13 * | 1-3,5,6 | |
| A | US-A-2 690 059 (BACKSTROM)<br>* Spalte 2, Zeile 7 - Spalte 5, Zeile 15; Figuren 1-3 * | 1,5,6 | |
| A | US-A-2 597 778 (COONS)<br>* Spalte 10, Zeile 6 - Spalte 11, Zeile 46; Figur 4 * | 1-3,6 | |
| A | US-A-2 345 505 (SIEDLE)<br>* Seite 1, rechte Spalte, Zeile 54 - Seite 4, rechte Spalte, Zeile 56; Figuren 1,2 * | 1-4,6 | |
| A | US-A-2 267 283 (LENNING) | | RECHERCHIERTE SACHGEBIETE (Int. Cl.4)<br><br>F 25 B<br>F 25 D |
| A | GB-A-1 268 325 (ELECTROLUX) | | |
| A | US-A-2 511 851 (IWASHITA) | | |

Der vorliegende Recherchenbericht wurde für alle Patentansprüche erstellt

| Recherchenort | Abschlußdatum der Recherche | Prüfer |
|---|---|---|
| DEN HAAG | 03-05-1989 | BOETS A.F.J. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument